# EUROPEAN PATENT SPECIFICATION

(11) **EP 1 907 722 B1**
(45) Date of publication and mention of the grant of the patent: **10.12.2008**
(21) Application number: 05778703.8
(22) Date of filing: 22.07.2005
(51) Int. Cl.: F16D 65/00, F16D 65/12

(54) **A BRAKING BAND OF A SELF-VENTILATED BRAKE DISC FOR A DISC BRAKE**
BREMSBAND EINER SELBSTLÜFTENDEN BREMSSCHEIBE EINER SCHEIBENBREMSE
BANDE DE FREINAGE D UN DISQUE DE FREIN AUTO VENTILÉ POUR UN FREIN À DISQUE

(43) Date of publication of application: 09.04.2008
(73) Proprietor: Freni Brembo S.p.A., 24035 Curno (Bergamo) (IT)
(72) Inventor: GOLLER, Ralf, Siegfried, I-24124 Bergamo (IT); BONFANTI, Roberto, I-24020 Scanzorosciate (Bergamo) (IT)
(74) Representative: Pulieri, Gianluca Antonio
(86) International application number: PCT/IT2005/000427
(87) International publication number: WO 2007/010569

(56) References cited:
- EP-A- 0 701 072
- EP-A- 0 872 659
- GB-A- 2 057 609

## Description

The object of the present invention is a braking band of a self-ventilated brake disc for a disc brake.

A known type of disc for self-ventilated brake for a disc brake with braking band substantially comprises a support bell to be connected, for example, to the wheel hub of a vehicle.

Said bell is connected, by suitable unions with fastening means, to the braking band that cooperates with the calipers for exerting the braking action on the vehicle.

As known, during the braking action, the friction of the pads on the disc causes on the latter a sometimes excessive and harmful rise in temperature, due to the dissipation of the kinetic energy of the motor vehicle caused by the friction.

Said braking disc typically comprises at least two parallel plate separated by connecting elements that ensure their cohesion.

The hollow space that forms between the connecting elements and said plate forms a ventilation duct.

Thanks to the air circulation between the plates, the disc cools on both the outer sides, as in the case of full disc, and on the inner sides of said braking band.

Examples of embodiments are known, for example, in documents EP0811783, EP0862704, DE69622422, DE69723443, EP0872659, EP071721, US5810123 and DE19533571.

However, these known self-ventilated brake discs exhibit the disadvantage of having a structure that does not keep into account the deformations the braking band and thereby the disc are subject to, during the braking action, especially in the disc peripheral region, wherein there are provided the connecting elements and which is in contact with the braking calipers.

The object of the present invention is to provide a braking band of a self-ventilated brake disc for a disc brake which should overcome the disadvantages mentioned with reference to the prior art.

The object is achieved with a braking band according to claim 1. The claims depending on claim 1 describe preferred embodiments.

The features and advantages of the braking band according to the present invention will appear more clearly from the following description of a preferred non-limiting embodiment, made with reference to the attached drawings, wherein:

- figure 1 shows a perspective, partial section view of a braking band;

- figure 2 shows a front partial section view of the braking band of figure 1;

- figure 3 shows a section view along line III-III of the braking band of figure 2;

- figure 4 shows a section view along line M of the braking band of figure 2;

- figure 5 shows a section view along line V-V of the braking band of figure 2;

- figure 6 shows a section view along line VI-VI of the braking band of figure 2;

- figure 7 shows a section view along line VII - VII of the braking band of figure 2;

- figure 8 shows an enlarged view of a detail of figure 1; and

- figure 9 shows an enlarged view of a further detail of figure 1.

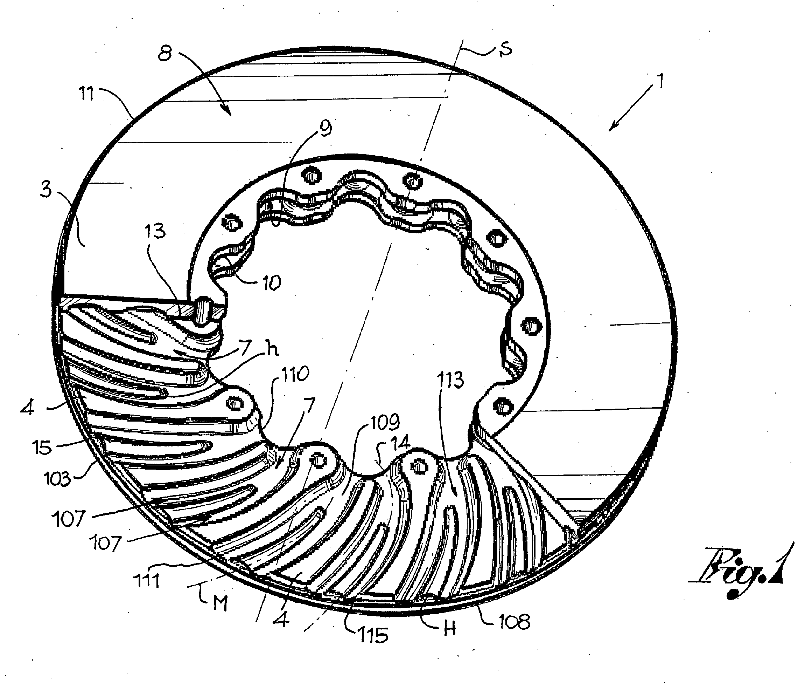

With reference to figure 1, reference numeral 1 globally denotes a braking band of a self-ventilated brake disc for a disc brake.

The braking band 1 develops about a symmetry axis s.

Said symmetry axis s also is the axis of rotation of the brake disc, defining a centre of rotation S of the braking band 1 and of the brake disc.

The brake disc thus comprises the braking band 1, which also develops about axis s (figure 1).

The brake disc can be made, for example, of stainless steel or cast iron.

Moreover, the brake disc can be made of a composite material, for example of carbon-ceramic composite material, or it is a so-called "carbon-carbon" brake disc.

Said braking band 1 is supported by a bell through a union.

The bell is arranged at the centre of the brake disc and herein, it favourably exhibits a flange which is connectable to a vehicle hub by connecting means, whereas the bell itself is provided with a periphery that supports the braking band 1, for example in a releasable manner, or it is integral with said braking band 1.

In accordance with the present invention, the braking band 1 comprises at least two plates stiffly connected to each other. In particular, the braking band 1 comprises at least a first plate 3 that extends from a radially inner edge 10 to a radially outer edge 11 of said first plate 3 (figures 1, 2 and 3).

Preferably, said radially inner edge 10 and said radially outer edge 11 develop about said axis s.

In accordance with a preferred embodiment, the braking band 1 is a circular rim whose inner perimeter defines the radially inner edge 10 and the outer perimeter defines the radially outer edge 11.

The first plate 3 further exhibits an outer surface 8 suitable for cooperating with a braking pad of said disc brake.

Moreover, the first plate 3 exhibits an inner surface 9, opposed to said outer surface 8, which lays on an inner plane 13, substantially parallel to the outer surface 8.

In accordance with the present invention, the braking band 1 further comprises at least a second plate 103 that extends from an inner edge 110 to a radially outer edge 111 of said second plate 103.

According to the present invention, the second plate 103 exhibits an outer surface 108 also suitable for cooperating with a braking pad of said disc brake system.

The second plate 103 further comprises an inner surface 109, opposed to said outer surface, which lays on an inner plane 113, substantially parallel to the outer surface 108.

In other words, the inner plane 13 and the inner plane 113 are substantially defined, for example, by the contact of surfaces 8 and 108 resting on a physical plane.

Favourably, said inner plane 13 and said inner plane 113 are substantially parallel to each other.

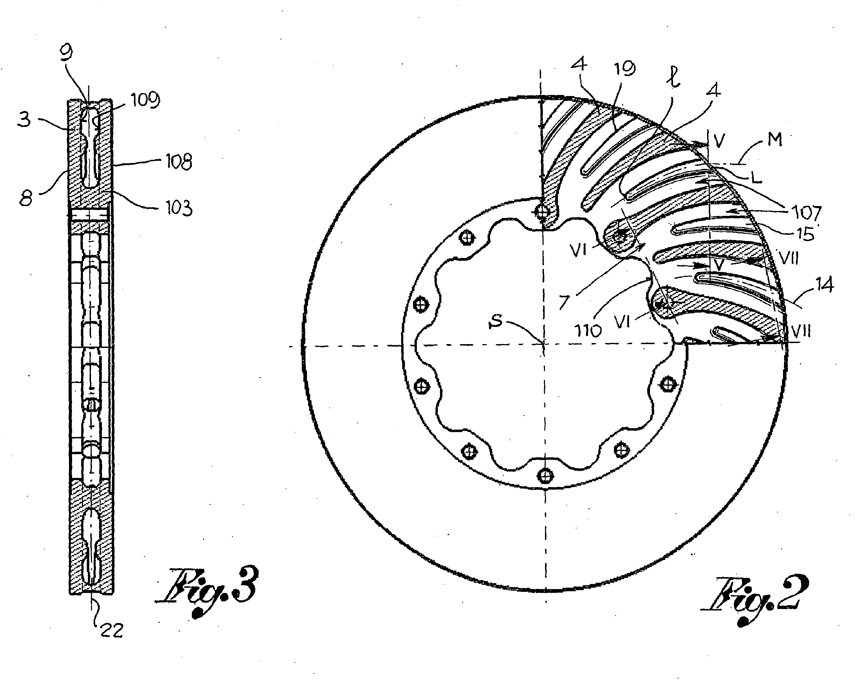

In other words, the first plate 3 and the second plate 103 are ideally separated by a separation plane 22 and the inner planes 13 and 113 are substantially parallel to the separation plane 22 of the plates (figures 3, 4, 5, 6 and 7).

The outer surfaces 8, 108 are the friction surfaces of the brake disc.

The braking band 1 further comprises connecting elements 4 between said inner surface 9 of said first plate 3 and said inner surface 109 of said second plate 103, so that the first plate 3 and the second plate 103 are stiffly connected to each other by the connecting elements 4 themselves.

For example, the first plate 3 and the second plate 103 are connected by connecting elements 4 regularly separated, that is, spaced apart, that is, arranged at regular step from each other.

According to a preferred embodiment, said connecting elements 4 are shaped as tongues.

Alternatively, said connecting elements 4 are substantially shaped as pins.

Favourably, the connecting elements 4 are arranged substantially radially on each of said inner surfaces 9, 109.

In accordance with the present invention, said connecting elements 4 extend substantially according to an involute relative to a circumference substantially passing along the radially inner edge 10, 110.

In accordance with an embodiment of the present invention, each of said connecting elements 4 extends relative to the axis of symmetry s along portions with a substantially curvilinear trajectory (see figure 1, 2).

Alternatively, said connecting elements 4 extend substantially radially relative to the axis of symmetry s.

In other words, said connecting elements 4 are basically orientated in the radial direction, that is, according to an involute relative to the circumference substantially passing along the radially inner edge 10, 110 and arranged equally spaced from each other.

Preferably, the connecting elements 4 have a first end 16 arranged in the inner region of the disc, substantially at the inlet of said ventilation channels 7 and a second end 17 arranged at the radially outer edge 11, 111 of the plates.

In accordance with a preferred embodiment of the invention, the connecting elements 4 comprise connecting elements 4 that are provided with a coupling portion 18 at said first end 16, for the coupling to the bell.

For example, there are provided connecting elements 4 exhibiting the coupling portion 18 arranged alternating with connecting elements 4 that are not provided with the coupling portion 18 (figure 1, 2).

The connecting elements 4 may be shaped as tongues that develop from the radially inner edge 10, 110 to the radially outer edge 11, 111, for example with constant width outwards of the braking band 1.

Alternatively, the connecting elements 4 may be shaped as tongues that develop from the radially inner edge 10, 110 to the radially outer edge 11, 111, for example with variable width outwards of the braking band 1; for example, the width of the connecting elements 4 may be increasing or on the contrary, decreasing.

In accordance with the present invention, said first plate 3 and said second plate 103 and said connecting means 4 form one or more hollow spaces that define ventilation channels 7 that develop along a development direction 14 that spans from each of the inner edges 10, 110 of said plates to said outer edges 11, 111 of said plates.

Favourably, the development direction 14 of the ventilation channels 7 is substantially parallel to the development direction of the connecting elements 4, from the radially inner edge 10, 110 to the radially outer edge 11, 111.

In other words, the first plate 3 and the second plate 103 are stiffly connected in approach by the connecting elements 4 and thus define the ventilation channels 7.

The connecting elements 4 between the first plate 3 and the second plate 103 of the braking band 1 can be made in any number and with any section shape, suitable for ensuring both the stiff connection between the plates themselves and a cooling air flow inside the ventilation channel 7.

Preferably, said development direction 14 is substantially curved, that is, involute from the inner edge of said braking band 1.

Alternatively, said development direction 14 is substantially radial relative to said centre S.

Therefore, according to an aspect of the invention, the cooling air flow is conveyed and controlled by the ventilation channels 7.

The conditions of air flow 12 thus obtained in the ventilation channels 7 increase the thermal exchange of the air with the braking band 1.

When the brake disc turns, air is sucked from inside the brake disc and conveyed outwards along the ventilation channels 7, so as to obtain a cooling air flow for cooling the brake disc itself.

In accordance with the present invention, at least one of said plates exhibits at least one protuberance 15 or rib projecting from the inner surface 9, 109 of at least one of said plates, said protuberance 15 being comprised between at least two of said connecting elements 4 (figures 1, 2 and 9).

In accordance with an embodiment of the present invention, at least the first plate 3 or the second plate 103 exhibit at least one protuberance 15 projecting from the inner surface 8, 108, that is, raising from the inner plane 13, 113 of the first plate 3 or second plate 103 itself.

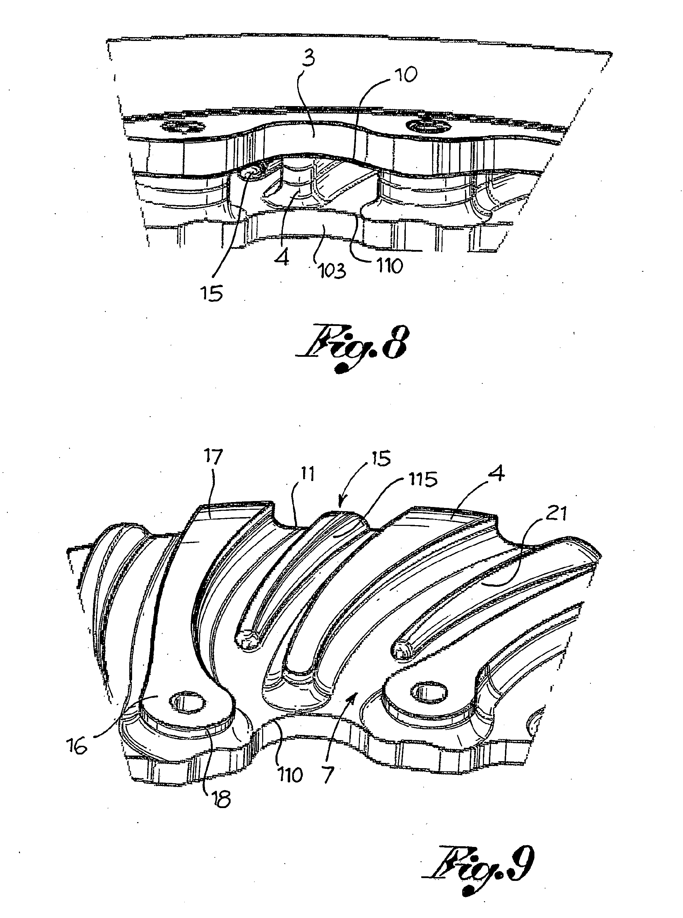

Protuberance 15 is comprised between at least two of said connecting elements 4 (figure 9), that is, it is obtained in at least one of said ventilation channels 7 defined by said connecting elements 4.

The protuberance develops along a direction substantially coinciding with the development direction 14 of the ventilation channels 7, that is, it develops starting from the proximity of said radially inner edge 10, 110 substantially up at said radially outer edge 11, 111.

Preferably, the development direction of protuberance 15 coincides with the centre line M of said ventilation channel 7; preferably, therefore, the centre line of protuberance 15 coincides with the centre line M of the ventilation channel 7.

Protuberance 15 extends in height from said inner plane 13, 113 that is, protuberance 15 exhibits a thickness projecting from the inner surface 9, 109 towards the opposite plate, that is, inwards of the brake disc.

Protuberance 15 extends in height from said inner plane 13, 113 up to said radially outer edge 11, 111 along said development direction 14 of said ventilation channel 7.

Preferably, protuberance 15 extends in height from said inner plane 13, 113 substantially starting from said radially inner edge 10, 110 up to said radially outer edge 11, 111 along said development direction 14 of said ventilation channel 7.

In accordance with a preferred embodiment, protuberance 15 extends from an inner region of the ventilation channel 7, that is, substantially from about half the braking band 1, up to the radially outer edge 11, 111.

The height of protuberance 15, that is, its cross thickness relative to the inner plane 13, 113 is always continuously increasing along said development direction 14 of said ventilation channel 7, that is, from a position closer to the centre of rotation S, up to the peripheral end of plate 3, 103 that is, substantially up to the radially outer edge 11, 111.

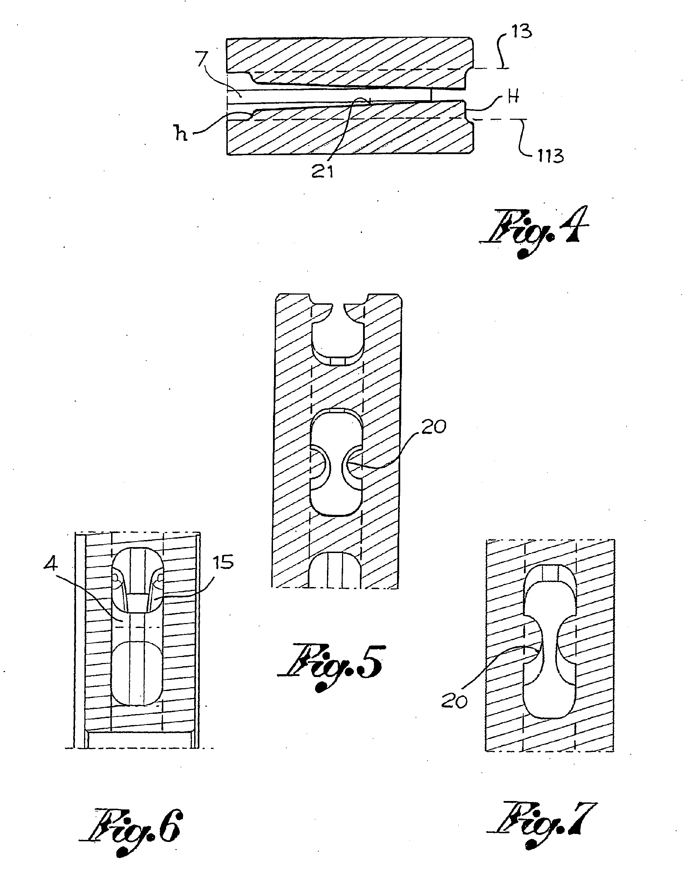

The height of protuberance 15 is therefore increasing from a minimum height h substantially in the proximity of said inner edge 10, 110 to a maximum height H, substantially at said radially outer edge 11, 111 (figures 4, 8 and 9) .

Preferably, the height of protuberance 15 is monotonically increasing.

In accordance with an embodiment of the present invention, the height of protuberance 15 is increasing and does not keep constant.

Alternatively, the height of protuberance 15 is increasing, the height pattern exhibiting a first concavity and a second concavity facing opposite directions relative to the inner plane 13, 113, for example a first concavity closer to the radially inner edge 10, 110 and facing upwards relative to the inner plane 13, 113 (figure 4). For example, the height has a sinusoidal and asymptotically increasing pattern, outwards of the braking band 1.

Preferably, protuberance 15 has a minimum thickness or height h substantially null in the proximity of the radially inner edge 10, 110; in fact, protuberance 15 is jointed to the inner surface 8, 108, in a "smooth and continuous" manner in the proximity of the radially inner edge 10, 110.

From said minimum height h, protuberance 15 continuously raises in height from the inner plane 13, 113 along the development direction 14, up to the maximum height H at the radially outer edge 11, 111.

Moreover, protuberance 15 extends in width substantially from the centre line M of said ventilation channel 7 towards said connecting means 4 which comprise a protuberance 15, that is, define said ventilation channel 7.

The width of protuberance 15 is continuously increasing from said centre line M of said ventilation channel 7 towards said connecting elements 4, along said development direction 14 of said ventilation channel 7.

In other words, the width of protuberance 15 is continuously increasing substantially from said radially inner edge 10, 110 to said radially outer edge 11, 111, from said centre line M of said ventilation channel 7 towards said connecting elements 4 (figures 1, 2 and 9).

Favourably, the width of protuberance 15 enlarges from a minimum width 1, at the minimum height h of protuberance 15 itself, up to a maximum width L, at the radially outer edge 11, 111, that is, at the maximum height H.

Preferably, the maximum height H does not reach a value equal to the distance between the first plate 3 and the second plate 103, that is, it is never equal to the thickness of the connecting elements 4, in other words, it is less than the height of the connecting elements 4.

Alternatively, the maximum height H may be equal to the thickness of the connecting elements 4.

According to an alternative embodiment, protuberance 15 has an increasing height up to about ten millimetres before the radially outer edge 11, 111.

In other words, when seen in plan view, protuberance 15 has a base profile 19, that is, a profile arranged on the inner plane 13, 113, and obtained from the intersection between the inner plane 13, 113 and protuberance 15, which is substantially shaped as a triangle, having curvilinear that is, arched sides (figure 2).

Alternatively, the base profile 19 is elongated semi-elliptical or semi-circular, or shaped as a "tooth" or as a "V".

In fact, when seen in section, protuberance 15 exhibits minimum height h and width 1, inwards of the brake disc, that is, in the proximity of the radially inner edge 10, 110 whereas, as the size of protuberance 15 increases along the development direction 14, the section of the same protuberance 15 enlarges from the centre line M of the ventilation channel 7 and at the same time it extends from the inner plane 13, 113, up to the maximum height H and to the maximum width L, substantially at the radially outer edge 11, 111.

Thus, protuberance 15 defines a single surface 115 always increasing which arches, from said radially inner edge 10, 110 to said radially outer edge 11, 111, that is, surface 115 does not keep at a constant height. In other words, protuberance 15 has a peak 21, that is, an upper profile, which is always increasing along the development direction 14. Favourably, surface 115 is jointed to the inner surface 8, 108 in a "smooth and continuous" manner, for minimising any hindrances to the outward flow of the cooling air.

In accordance with an alternative embodiment, the height of protuberance 15, that is, surface 115 exhibits increasing portions alternating with constant portions, for example parallel to the inner plane 13, 113, but avoiding that the end portion of protuberance 15, that is that substantially at the outer edge 11, 111, keeps at a constant height; in other words, the end portion of protuberance 15 is always increasing in height, relative to the inner plane 13, 113.

In yet other words, the first plate 3 and the second plate 103 are stiffly connected by the connecting elements 4, thus forming a single body; the single body, as illustrated above, exhibits a plurality of hollow spaces and cavities, formed by the same plates and by the connecting elements, for allowing the outward flow of the cooling air.

Locally, the hollow spaces exhibit a variation of thickness relative to the even thickness of the plates, obtained on the inner surface 8, 108, and said variation of thickness is always increasing from the inner edge 10, 110 to the outer edge 11, 111 of the braking band 1, so as to provide optimum stiffness to the braking band 1 itself.

According to the present invention, ideally following the development direction 14, the section of the ventilation channel 7 changes from a substantially rectangular or rectangular chamfered shape (figure 6) to a centrally tapered slot shape (figures 5 and 7).

In accordance with a preferred embodiment, therefore, the ventilation channel 7 has a cross section substantially shaped as a rounded or chamfered "M", that is, the opening defined by the ventilation channel 7 is a slot exhibiting at least one narrowing lobe or a concavity facing outwards of the braking band 1, that is, a central "bump" or depression.

In fact, protuberance 15 divides the ventilation channel 7, thus defining two half channels 107 substantially parallel to each other and centrally jointed.

The two half channels 107 are substantially equal and parallel relative to the development direction 14 and the cooling air flow 12 divides therein.

Favourably, the section of half channels 107 continuously narrows along the development direction 14, towards the radially outer edge 11.

Alternatively, the section of half channels 107 narrows or enlarges, according to the base profile 19 of protuberance 15 and/or to the width pattern of the connecting elements 4.

According to the present invention, the taper of the ventilation channel 7 narrows moving from the first end 16 of protuberance 15 arranged in the proximity of the radially inner edge 10, 110, that is, facing centre S of the braking band 1, up to the radially outer edge 11, 111 of the braking band 1, avoiding to keep constant.

In accordance with a preferred embodiment, the cross section of protuberance 15 defines a cross profile 20 of protuberance 15 having a semi-circular or semi-elliptical shape (figures 5 and 7), said shape being imparted by protuberance 15 itself.

The cross section of said ventilation channel 7 defines the cross profile 20 of said protuberance 15 of continuously increasing size along said development direction 14; in other words, the cross profile 20 forms the taper of the ventilation channel 7.

Favourably, the maximum height of protuberance 15 is comprised within a range between about one and five millimetres, even more preferably between about two and four millimetres.

In accordance with a preferred embodiment, protuberance 15 is arranged substantially at the centre of the ventilation channel 7, that is, its development direction follows the centre line M of the channel itself, defining a surface which is substantially symmetrical relative to centre line M itself.

Preferably, protuberance 15 has the base profile 19 evenly continuous and jointed to the inner surface 8, 108, that is, without interruption, that is, not exhibiting discontinuities.

In accordance with a preferred embodiment, each of the first plate 3 and the second plate 103 exhibits at least one projecting protuberance 15 comprised in a ventilation channel 7.

Preferably, in each ventilation channel 7 there are two protuberances 15 mutually facing each other, so that the section transversal to the development direction 14 of the ventilation channel 7, ideally taken along the development direction 14 itself, is substantially always shaped as an "eight", or as "dog bone", that is, so that it exhibits two narrowing lobes (figures 5, 7). In other words, the profile of the cross section is given by the rounded "M" shape and by its symmetric relative to the ideal separation plane 22 of the plates, up to the radially outer edge 11, 111 (figures 5 and 7).

Advantageously, with the braking band 1 in accordance with the present invention, the stiffness of the plates between the connecting elements is maximised, thus optimising the distribution of the masses based on the trend of the stresses and of the consequent deformations the plate is subject to, so as to decrease the variation of thickness of the plates in the region between the connecting elements and so as to prevent the DTV (that is, the disc thickness variation) and consequent noise, "throbs" of the brake pedal, "hot spots" and the like, while braking.

In fact, the thickness of the protuberances, which allows an increase of the structural stiffness of the braking band, is calculated, that is, calibrated for optimum static resistance based on the stresses imposed by the braking calipers, that is, the thickness decreases towards the centre of the disc, at the drop of the mechanical stresses of the calipers on the braking band towards the centre of the disc.

In other words, advantageously, a gradual increase of the plate thickness is obtained from inwards the brake disc, radially towards the outer periphery, at the gradual deformation the braking band is subject to, following the braking action of the calipers, for obtaining the desired stiffness of the braking band.

Advantageously, the protuberance base profile and the increasing pattern of its height and width allow obtaining a more balanced braking band, wherein the disc thickness variation (DTV) is minimised and made even.

In accordance with another advantageous aspect of the present invention, an optimum cooling air flow rate is obtained inside the ventilation channels, with consequent increase of the thermal exchange capacity and higher cooling efficiency.

In fact, the air flow radially entering into the ventilation channels is a turbulent air flow that, entering into the channel, becomes even more turbulent, meeting a narrowing of the channel lumen which is increasingly smaller. Surprisingly, however, the turbulent air flow is also stabilised along the half channels the protuberances divides the ventilation channel into.

In fact, innovatively, the air flow entering into the ventilation channel and meeting the protuberance is divided into the two half channels for stabilising the turbulence of the cooling air flow entering into the channel: the protuberance stabilises the flow dividing it into the two half channels.

Advantageously, in fact, there is a narrowing of the flowing section of the cooling air flow, with a consequent increase of the flow speed: this makes the turbulent flow steadier, that is, it increases the thickness of the limit layer of the air flow and there occur no disjunctions of the limit layer in the air flow, when it flows inside the ventilation channel.

The air flow is advantageously sucked from inside the brake disc and it flows towards the inlet of the ventilation channels and through them, outwards, thanks to the difference in pressure that sets up between inside and outside of the brake disc.

When the air flow enters into the ventilation channels and meets the connecting elements, that is, the tongues, the air flow turbulence further increases.

The air flow is forced into the ventilation channels and here it meets the protuberances, which are advantageously shaped following the pattern of the threads of fluid of the cooling flow, and it is divided into the two half channels thereby. Therefore, thanks to the flow acceleration, due to the division into the half channels and to the radial narrowing outwards, on the one hand there occurs a stabilisation of the flow itself, and on the other hand, an increase of the cooling flow speed and therefore an aerodynamic self-stabilisation of the flow. Moreover, in the end portion of the ventilation channels, that is, in the proximity of the outer edge, the cooling flow is further accelerated and stabilised thanks to the higher centrifugal force.

Thanks to the optimum base profile and pattern of the protuberance, the turbulence stabilisation advantageously improves along the channel development direction, that is, towards the outer outlet of the disc and at the same time, the thermal exchange efficiency increases, which is very high even at the outer periphery of the disc: in fact, the stabilised turbulent flow exchanges heat more efficiently.

In fact, the cooling air current is not affected by turbulences that generate in the proximity of the tongues anymore.

Thus, since the temperature of the braking band increases towards the radial exterior of the brake disc, and since the rise in temperature negatively affects the stiffness of the braking band itself, the thickness of the band itself is gradually increased by the protuberances to locally increase in a targeted manner the stiffness of the braking band.

Advantageously, the protuberances have an increasing thickness, so as to provide for a higher stiffness of the plates, in particular mostly localised in the peripheral region in the proximity of the outer edge of the ventilation channels, to better stand the mechanical stresses due to the pressure of the pads and to the thermal stresses due to the continuous heating and cooling of the brake disc.

Innovatively, since the peripheral region of the braking band is that subject to the highest thermal and mechanical stresses, the protuberances are provided with increasing thickness and width in the outlet direction towards the outer edge of the channel, so that the local maximum stiffness region also coincides with the region with the most mechanical and thermal stresses.

Advantageously, moreover, the air flow meets the protuberances that have increasing height and width, so that the air flow itself at the inlet to the channel does not meet a sudden narrowing and enlargement, but is more gradually channelled into the half channels.

According to a further advantageous aspect, also the region of the so-called "effective radius", which exhibits different cross thickness due to the presence of the tongues, is stiffened by the presence of the protuberances that extend between the tongues towards the outer edge of the braking band, so as to make the thermal gradients even and thereby prevent the onset of thermal cracks and the DTV phenomenon.

Advantageously, in fact, in the high thermal exchange zone of the "effective radius", the plates are stiffened between the tongues, to prevent the forming of thermal cracks and the onset of disc deformations and thus of DTV.

Therefore, a further important advantage of the braking band thus obtained is the high resistance to mechanical strains and to thermal expansion, especially in the zone most subject to deformations due to the braking action of the pad.

## Claims

1. A braking band (1) of a self-ventilated brake disc for a disc brake (1), comprising:
- a first plate (3) extending from a radially inner edge (10, 110) to a radially outer edge (11, 111) of said first plate (3), said first plate (3) exhibiting:
- an outer surface (8) suitable for cooperating with a braking pad of said disc brake;
- an inner surface (9) substantially laying on an inner plane (13) substantially parallel to said outer surface (8);
- a second plate (103) extending from an inner edge (110) to an outer edge (111) of said second plate (103), said second plate (103) exhibiting:
- an outer surface (108) suitable for cooperating with a braking pad of said disc brake;
- an inner surface (109) substantially laying on an inner plane (113) substantially parallel to said outer surface (108);
- connecting elements (4) connecting said inner surface (8) of said first plate (3) to said inner surface (108) of said second plate (103);
said first plate (3), said second plate (103) and said connecting elements (4) defining ventilation channels (7) that develop along a development direction (14) spanning from said radially inner edge (10, 110) of said first plate (3) and said second plate (103) to said radially outer edge (11, 111) of said first plate (3) and said second plate (103);
wherein at least one of said first plate (3) and second plate (103) exhibits at least one protuberance (15) projecting from said inner surface (9, 109) of said at least one plate;
wherein, moreover, said protuberance (15) extends in height from said inner plane (13, 113) substantially up to said radially outer edge (11, 111) along said development direction (14) of said ventilation channel (7), said height being always increasing along said development direction (14) of said ventilation channel (7), from a minimum height (h) substantially in the proximity of said radially inner edge (10, 110), to a maximum height (H), substantially at said radially outer edge (11, 111).

2. A braking band (1) according to claim 1, wherein said height is always increasing in a continuous manner.

3. A braking band (1) according to claim 1 or 2, wherein said protuberance (15) exhibits a width which extends transversally substantially from the centre line (M) of the development direction (14) of said ventilation channel (7) towards said connecting elements (4), said width of said protuberance (15) being increasing in a continuous manner along said development direction (14) of said ventilation channel (7), substantially from said radially inner edge (10, 110) to said radially outer edge (11, 111) of said at least one of said first plate (3) and second plate (103).

4. A braking band (1) according to any one of the previous claims, wherein said protuberance (15) defines a single surface (115) continuously jointed which is increasing in height, avoiding to keep constant, from said radially inner edge (10, 110) to said radially outer edge (11, 111).

5. A braking band (1) according to any one of the previous claims, wherein said protuberance (15) is comprised between at least two of said connecting elements (4).

6. A braking band (1) according to any one of the previous claims, wherein the cross section of the ventilation channel (7) changes from a substantially rectangular shape to a slot shape centrally tapered along said development direction (14) of said ventilation channel (7).

7. A braking band (1) according to claim 6, wherein said taper narrows moving from the end of said protuberance (15) arranged in the proximity of said inner edge (10) up to said radially outer edge (11, 111), avoiding to keep constant.

8. A braking band (1) according to claim 6 or 7, wherein the cross section of said ventilation channel defines a cross profile (20) of said protuberance (15) of continuously increasing size along said development direction (14).

9. A braking band (1) according to claim 8, wherein said cross profile (20) has a semi-circular or semi-elliptical shape, said shape being imparted by said protuberance (15).

10. A braking band (1) according to any one of the previous claims, wherein said connecting elements (4) are shaped as tongues.

11. A braking band (1) according to any one of claims 1 to 9, wherein said connecting elements (4) are shaped as a pin.

12. A braking band (1) according to any one of the previous claims, wherein said braking band (1) develops about an axis of symmetry (s).

13. A braking band (1) according to any one of the previous claims, wherein said connecting elements (4) are arranged substantially radially on each of said inner surfaces (9, 109).

14. A braking band (1) according to any one of the previous claims, wherein said connecting elements (4) substantially extend according to an involute.

15. A braking band (1) according to any one of claims 1 to 13, wherein said each of connecting elements (4) extends relative to said axis of symmetry (s) along portions of substantially curvilinear trajectory.

16. A braking band (1) according to any one of the previous claims, wherein said connecting elements (4) are arranged equally spaced from each other.

17. A braking band (1) according to any one of the previous claims, wherein said connecting elements (4) have a first end (16) arranged in the inner region of said braking band (1), substantially at the inlet of said ventilation channel (7) and a second end (17) arranged at said radially outer edge (11, 111) substantially at the outlet of said ventilation channel (7).

18. A braking band (1) according to claim 17, wherein said connecting elements (4) comprise connecting elements (4) provided with a coupling portion (18) at said first end (16), for coupling to a bell of a brake disc of said disc brake, arranged alternating with said connecting elements (4) not exhibiting said coupling portion (18).

19. A braking band (1) according to any one of the previous claims, wherein said protuberance (15) is arranged substantially along said centre line (M) of said ventilation channel (7) in said development direction (14).

20. A braking band (1) according to any one of the previous claims, wherein said protuberance (15) divides said ventilation channel (7) into two sub-channels (107) extending along said development direction (14).

21. A braking band (1) according to any one of the previous claims, wherein said width of said protuberance (15) enlarges from a minimum width (1), at said minimum height (h) of said protuberance (15), up to a maximum width (L), at said radially outer edge (11, 111).

22. A braking band (1) according to claim 21, wherein said maximum width (L) is substantially obtained at said maximum height (H).

23. A braking band (1) according to any one of the previous claims, wherein said maximum height (H) is less than the height of connecting elements (4).

24. A braking band (1) according to any one of claims 1 to 22, wherein said maximum height (H) is about equal to the height of connecting elements (4).

25. A braking band (1) according to any one of the previous claims, wherein said maximum height (H) of said protuberance (15) is comprised within a range of about one and five millimetres.

26. A braking band (1) according to any one of the previous claims, wherein said maximum height (H) of said protuberance (15) is comprised within a range of about two and four millimetres.

27. A braking band (1) according to any one of the previous claims, wherein said protuberance (15) seen in plan view has a base profile (19) which is substantially shaped as a triangle, having curvilinear that is, arched sides.

28. A braking band (1) according to any one of claims 1 to 26, wherein said protuberance (15) seen in plan view has a base profile (19) which has a substantially elongated semi-elliptical or semi-circular shape or a "tooth" or a "V" shape.

29. A braking band (1) according to any one of the previous claims, wherein said protuberance (15) defines a single increasing surface (115).

30. A braking band (1) according to claim 29, wherein said surface (115) is continuously jointed to said inner surface (8, 108), from said radially inner edge 10 to said radially outer edge 11.

31. A braking band (1) according to any one of the previous claims, wherein each of said first plate (3) and said second plate (103) exhibits at least one protuberance (15).

32. A braking band (1) according to any one of the previous claims, wherein each ventilation channel (7) exhibits two protuberances (15) mutually facing each other so that the cross section of said ventilation channel (7) is always substantially shaped as an "eight" and the like, along said development direction (14).

33. A braking band (1) of a self-ventilated brake disc for a disc brake (1), comprising:
- a first plate (3) extending from a radially inner edge (10, 110) to a radially outer edge (11, 111) of said first plate (3), said first plate (3) exhibiting:
- an outer surface (8) suitable for cooperating with a braking pad of said disc brake;
- an inner surface (9) substantially laying on an inner plane (13) substantially parallel to said outer surface (8);
- a second plate (103) extending from an inner edge (110) to an outer edge (111) of said second plate (103), said second plate (103) exhibiting:
- an outer surface (108) suitable for cooperating with a braking pad of said disc brake;
- an inner surface (109) substantially laying on an inner plane (113) substantially parallel to said outer surface (108);
- connecting elements (4) connecting said inner surface (8) of said first plate (3) to said inner surface (108) of said second plate (103);
said first plate (3), said second plate (103) and said connecting elements (4) defining ventilation channels (7) that develop along a development direction (14) spanning from said radially inner edge (10, 110) of said first plate (3) and said second plate (103) to said radially outer edge (11, 111) of said first plate (3) and said second plate (103);
wherein at least one of said first plate (3) and second plate (103) exhibits at least one protuberance (15) projecting from said inner surface (9, 109) of said at least one plate;
wherein, moreover, said protuberance (15) extends in height from said inner plane (13, 113) substantially up to ten millimetres before said radially outer edge (11, 111) along said development direction (14) of said ventilation channel (7), said height being always increasing along said development direction (14) of said ventilation channel (7), from a minimum height (h) substantially in the proximity of said radially inner edge (10, 110), to a maximum height (H), substantially at said radially outer edge (11, 111).

34. A braking band (1) according to claim 33, wherein said height is always increasing in a continuous manner.

35. A braking band (1) according to claim 33 or 34, wherein said protuberance (15) exhibits a width which extends transversally substantially from the centre line (M) of the development direction (14) of said ventilation channel (7) towards said connecting elements (4), said width of said protuberance (15) being increasing in a continuous manner along said development direction (14) of said ventilation channel (7), substantially from said radially inner edge (10, 110) to said radially outer edge (11, 111) of said at least one of said first plate (3) and second plate (103).

36. A disc (1) for a disc brake comprising a braking band (1) according to any one of the previous claims.

37. A disc brake comprising a disc (1) according to claim 36.

## Patentansprüche

1. Reibring (1) einer selbstlüftenden Bremsscheibe für eine Scheibenbremse (1), umfassend
- eine erste Scheibe (3), die sich von einem radialen Innenrand (10, 110) zu einem radialen Außenrand (11, 111) der genannten ersten Scheibe (3) erstreckt, wobei die genannte erste Scheibe (3) folgendes aufweist:
- eine Außenfläche (8), die geeignet ist, mit einem Bremsbelag der ge-nannten Scheibenbremse zusammenzuwirken;
- eine Innenfläche (9), die im wesentlichen in einer inneren Ebene (13) liegt, die im wesentlichen parallel zu der genannten Außenfläche (8) ist;
- eine zweite Scheibe (103), die sich von einem Innenrand (110) zu einem Außenrand (111) der genannten zweiten Scheibe (103) erstreckt, wobei die genannte zweite Scheibe (103) folgendes aufweist:
- eine Außenfläche (108), die geeignet ist, mit einem Bremsbelag der ge-nannten Scheibenbremse zusammenzuwirken;
- eine Innenfläche (109), die im wesentlichen in einer inneren Ebene (113) liegt, die im wesentlichen parallel zu der genannten Außenfläche (108) ist;
- verbindungselemente (4), die die genannte Innenfläche (8) der genann-ten ersten Scheibe (3) mit der genannten Innenfläche (108) der genann-ten zweiten Scheibe (103) verbinden;
wobei die genannte erste Scheibe (3), die genannte zweite Scheibe (103) und die genannten Verbindungselemente (4) Lüftungskanäle (7) definieren, die entlang einer Entwicklungsrichtung (14) verlaufen und sich von dem genannten radialen Innenrand (10, 110) der genannten ersten Scheibe (3) und der genannten zweiten Scheibe (103) zu dem genannten radialen Außenrand (11, 111) der genannten ersten Scheibe (3) und der genannten zweite Scheibe (103) erstrecken;
wobei zumindest eine der genannten ersten Scheibe (3) und der ge-nannten zweiten Scheibe (103) zumindest einen Steg (15) aufweist, der von der genannten Innenfläche (9, 109) der genannten zumindest einen Scheibe herausragt;
wobei sich darüber hinaus der genannte Steg (15) von der genannten inneren Ebene (13, 113) aus entlang der genannten Entwicklungsrich-tung (14) des genannten Belüftungskanals (7) im wesentlichen bis zu dem genannten radialen Außenrand (11, 111) in die Höhe erstreckt, wo-bei die genannte Höhe entlang der genannten Entwicklungsrichtung (14) des genannten Belüftungskanals (7) von einer kleinsten Höhe (h), die im wesentlichen in der Nähe des genannten radialen Innenrandes (10, 110) gegegen ist, bis zu einer größten Höhe (H), die sich im wesentlichen an dem genannten radialen Außenrand (11, 111) befindet, immer weiter anwächst.

2. Reibring (1) nach Anspruch 1, wobei die genannte Höhe immer kontinuierlich anwächst.

3. Reibring (1) nach Anspruch 1 oder 2, wobei der genannte Steg (15) eine Breite aufweist, die sich im wesentlichen quer von der Mittellinie (M) der Entwicklungsrichtung (14) des genannten Belüf-tungskanals (7) aus zu den genannten Verbindungselementen (4) erstreckt, wobei die Breite des genannten Steges (15) entlang der genannten Entwick-lungsrichtung (14) des genannten Belüftungskanals (7) kontinuierlich von dem genannten radialen Innenrand (10, 110) zu dem genannten radialen Außen-rand (11, 111) der genannten zumindest einen der genannten ersten Scheibe (3) und zweiten Scheibe (103) anwächst.

4. Reibring (1) nach einem der vorhergehenden Ansprüche, wobei der genannte Steg (15) eine Einzelfläche (115) definiert, die durchge-hend verbunden ist und von dem genannten radialen Innenrand (10, 110) zum genannten radialen Außenrand (11, 111) unter Vermeidung einer Konstanz in der Höhe anwächst.

5. Reibring (1) nach einem der vorhergehenden Ansprüche, wobei der genannten Steg (15) zwischen zumindest zwei der genannten Ver-bindungselemente (4) vorgesehen ist.

6. Reibring (1) nach einem der vorhergehenden Ansprüche, wobei der Querschnitt des Belüftungskanals (7) sich von einer im wesentlichen rechteckigen Form zu einer Schlitzform verändert, die entlang der genannten Entwicklungsrichtung (14) des genannten Belüftungskanals (7) in der Mitte ver-jüngt ist.

7. Reibring (1) nach Anspruch 6, wobei sich die genannte Verjüngung in Richtung von dem Ende des genannten Steges (15), das in der Nähe des genannten Innenrandes (10) angeordnet ist, zu dem genannten radialen Außenrand (11, 111) hin unter Vermeidung einer Konstanz verengt.

8. Reibring (1) nach Anspruch 6 oder 7, wobei der Querschnitt des genannten Belüftungskanals ein kreuzförmiges Pro-fil (20) des genannten Steges (15) von kontinuierlich zunehmender Größe ent-lang der genannten Entwicklungsrichtung (14) definiert.

9. Reibring (1) nach Anspruch 8, wobei das genannte kreuzförmige Profil (20) eine halbrunde oder halbellipti-sche Form hat, wobei die genannte Form durch den genannten Steg (15) ver-liehen wird.

10. Reibring (1) nach einem der vorhergehenden Ansprüche, wobei die genannten Verbindungselemente (4) wie Zungen geformt sind.

11. Reibring (1) nach einem der Ansprüche 1 bis 9, wobei sich die genannten Verbindungselemente (4) wie ein Stift geformt sind.

12. Reibring (1) nach einem der vorhergehenden Ansprüche, wobei der genannte Reibring (1) um eine Symmetrieachse (s) ausgebildet ist.

13. Reibring (1) nach einem der vorhergehenden Ansprüche, wobei die genannten Verbindungselemente (4) im wesentlichen radial auf jeder der genannten Innenflächen (9, 109) angeordnet sind.

14. Reibring (1) nach einem der vorhergehenden Ansprüche, wobei die genannten Verbindungselemente (4) im wesentlichen gemäß einer Evolvente verlaufen.

15. Reibring (1) nach einem der Ansprüche 1 bis 13, wobei sich jedes der genannten Verbindungselemente (4) gegenüber der ge-nannten Symmetrieachse (s) entlang von Abschnitten von im wesentlichen ge-krümmten Bahnen erstreckt.

16. Reibring (1) nach einem der vorhergehenden Ansprüche, wobei die genannten Verbindungselemente (4) gleichmäßig beabstandet von-einander angeordnet sind.

17. Reibring (1) nach einem der vorhergehenden Ansprüche, wobei die genannten Verbindungselemente (4) ein erstes Ende (16) aufweisen, das im Innenbereich des genannten Reibringes (1) im wesentlichen an der Ein-trittsöffnung des genannten Belüftungskanals (7) angeordnet ist sowie ein zweites Ende (17), das an dem genannten radialen Außenrand (11, 111) im wesentlichen an der Austrittsöffnung des genannten Belüftungskanals (7) an-geordnet ist.

18. Reibring (1) nach Anspruch 17, wobei die genannten Verbindungselemente (4) Verbindungselemente (4) um-fassen, die mit einem Verbindungsabschnitt (18) an dem genannten ersten En-de (16) zum Verbinden mit einer Bremsscheibenaufweitung der genannten Scheibenbremse versehen sind, die abwechselnd mit den genannten Verbin¬dungselementen (4) angeordnet sind, die keinen solchen Verbindungsabschnitt (18) aufweisen.

19. Reibring (1) nach einem der vorhergehenden Ansprüche, wobei der genannte Steg (15) im wesentlichen entlang der genannten Mittelli-nie (M) des genannten Belüftungskanals (7) in der genannten Entwicklungs-richtung (14) angeordnet ist.

20. Reibring (1) nach einem der vorhergehenden Ansprüche, wobei der genannte Steg (15) den genannten Belüftungskanal (7) in zwei Un-terkanäle (107) unterteilt, die entlang der Entwicklungsrichtung (14) verlaufen.

21. Reibring (1) nach einem der vorhergehenden Ansprüche, wobei die genannte Breite des genannten Steges (15) von einer kleinsten Brei-te (I) bei der genannten kleinsten Höhe (h) des genannten Steges (15) bis zu einer Höchstbreite (L) an dem genannten radialen Außenrand (11, 111) an-wächst.

22. Reibring (1) nach Anspruch 21, wobei die genannte Höchstbreite (L) im wesentlichen bei der genannten größ-ten Höhe (H) erreicht wird.

23. Reibring (1) nach einem der vorhergehenden Ansprüche, wobei die genannte größte Höhe (H) geringer ist als die Höhe der Verbin-dungselemente (4).

24. Reibring (1) nach einem der Ansprüche 1 bis 22, wobei die genannte größte Höhe (H) etwa gleich der Höhe der Verbindungs-elemente (4) ist.

25. Reibring (1) nach einem der vorhergehenden Ansprüche, wobei die genannte größte Höhe (H) des genannten Steges (15) in einem Be-reich von etwa einem bis fünf Millimetern liegt.

26. Reibring (1) nach einem der vorhergehenden Ansprüche, wobei die genannte größte Höhe (H) des genannten Steges (15) in einem Be-reich von etwa zwei bis vier Millimetern liegt.

27. Reibring (1) nach einem der vorhergehenden Ansprüche, wobei der genannte Steg (15), in Draufsicht betrachtet, ein Grundprofil (19) aufweist, das im wesentlichen wie ein Dreieck mit gekrümmten, d.h. bogenför-migen, Seiten geformt ist.

28. Reibring (1) nach einem der Ansprüche 1 bis 26, wobei der genannte Steg (15), in Draufsicht betrachtet, ein Grundprofil (19) aufweist, das eine im wesentlichen längliche halbelliptische oder halbrunde Form oder eine "Zahn"- oder "V"-Form hat.

29. Reibring (1) nach einem der vorhergehenden Ansprüche, wobei der genannte Steg (15) eine einzelne sich vergrößernde Fläche (115) definiert.

30. Reibring (1) nach Anspruch 29, wobei die genannte Fläche (115) durchgehend mit der genannten Innenfläche (8, 108) von dem genannten radialen Innenrand (10) bis zum genannten radia-len Außenrand (11) verbunden ist.

31. Reibring (1) nach einem der vorhergehenden Ansprüche, wobei jede der genannten ersten Scheibe (3) und der genannten zweiten Scheibe (103) zumindest einen Steg (15) aufweist.

32. Reibring (1) nach einem der vorhergehenden Ansprüche, wobei jeder Belüftungskanal (7) zwei Stege (15) aufweist, die einander zuge-wandt sind, so dass der Querschnitt des genannten Belüftungskanals (7) ent-lang der genannten Entwicklungsrichtung (14) immer im wesentlichen wie eine "Acht" und ähnlich geformt ist.

33. Reibring (1) einer selbstlüftenden Bremsscheibe für eine Scheibenbremse (1), umfassend:
- eine erste Scheibe (3), die sich von einem radialen Innenrand (10, 110) zu einem radialen Außenrand (11, 111) der genannten ersten Scheibe (3) erstreckt, wobei die genannte erste Scheibe (3) folgendes aufweist:
- eine Außenfläche (8), die geeignet ist, mit einem Bremsbelag der ge-nannten Scheibenbremse zusammenzuwirken;
- eine Innenfläche (9), die im wesentlichen in einer inneren Ebene (13) liegt, die im wesentlichen parallel zu der genannten Außenfläche (8) ist;
- eine zweite Scheibe (103), die sich von einem Innenrand (110) zu einem Außenrand (111) der genannten zweiten Scheibe (103) erstreckt, wobei die genannte zweite Scheibe (103) folgendes aufweist:
- eine Außenfläche (108), die geeignet ist, mit einem Bremsbelag der ge-nannten Scheibenbremse zusammenzuwirken;
- eine Innenfläche (109), die im wesentlichen in einer inneren Ebene (113) liegt, die im wesentlichen parallel zu der genannten Außenfläche (108) ist;
- verbindungselemente (4), die die genannte Innenfläche (8) der genann-ten ersten Scheibe (3) mit der genannten Innenfläche (108) der genann-ten zweiten Scheibe (103) verbinden;
wobei die genannte erste Scheibe (3), die genannte zweite Scheibe (103) und die genannten Verbindungselemente (4) Lüftungskanäle (7) definieren, die entlang einer Entwicklungsrichtung (14) verlaufen und sich von dem genannten radialen Innenrand (10, 110) der genannten ersten Scheibe (3) und der genannten zweiten Scheibe (103) zum ge-nannten radialen Außenrand (11, 111) der genannten ersten Scheibe (3) und der genannten zweite Scheibe (103) erstrecken;
wobei zumindest eine der genannten ersten Scheibe (3) und zweiten Scheibe (103) zumindest einen Steg (15) aufweist, der von der genann-ten Innenfläche (9, 109) der genannten zumindest einen Scheibe her-ausragt;
wobei sich der genannte Steg (15) darüber hinaus von der genannten inneren Ebene (13, 113) aus im wesentlichen bis zu 10 Millimeter vor dem genannten radialen Außenrand (11, 111) entlang der genannten Entwicklungsrichtung (14) des genannten Belüftungskanals (7) in die Höhe erstreckt, wobei die genannte Höhe entlang der genannten Ent-wicklungsrichtung (14) des genannten Belüftungskanals (7) von einer kleinsten Höhe (h), die im wesentlichen in der Nähe des genannten ra-dialen Innenrandes (10, 110) gegeben ist, bis zu einer größten Höhe (H), die sich im wesentlichen an dem genannten radialen Außenrand (11, 111) befindet, immer weiter anwächst.

34. Reibring (1) nach Anspruch 33, wobei sich die genannte Höhe immer kontinuierlich anwächst.

35. Reibring (1) nach Anspruch 33 oder 34, wobei der genannte Steg (15) eine Breite aufweist, die sich im wesentlichen quer von der Mittellinie (M) der Entwicklungsrichtung (14) des genannten Belüf-tungskanals (7) aus zu den genannten Verbindungselementen (4) erstreckt, wobei die Breite des genannten Steges (15) entlang der genannten Entwick-lungsrichtung (14) des genannten Belüftungskanals (7) kontinuierlich im we-sentlichen von dem genannten radialen Innenrand (10, 110) zu dem genannten radialen Außenrand (11, 111) der genannten zumindest einen der genannten ersten Scheibe (3) und zweiten Scheibe (103) anwächst.

36. Scheibe (1) für eine Scheibenbremse, umfassend einen Reibring (1) gemäß einem der vorhergehenden Ansprüche.

37. Scheibenbremse umfassend eine Scheibe (1) nach Anspruch 36.

## Revendications

1. Bande de freinage (1) d'un disque de frein auto-ventilé pour un frein à disque (1), comprenant:
- une première plaque (3) s'étendant d'un bord radialement intérieur (10, 110) à un bord radialement extérieur (11, 111) de la dite première plaque (3), la dite première plaque (3) présentant:
- une surface extérieure (8) prévue pour coopérer avec un patin de freinage du dit frein à disque;
- une surface intérieure (9) sensiblement située sur un plan intérieur (13) sensiblement parallèle à la dite surface extérieure (8);
- une deuxième plaque (103) s'étendant d'un bord intérieur (110) à un bord extérieur (111) de la dite deuxième plaque (103), la dite deuxième plaque (103) présentant:
- une surface extérieure (108) prévue pour coopérer avec un patin de freinage du dit frein à disque;
- une surface intérieure (109) sensiblement située sur un plan intérieur (113) sensiblement parallèle à la dite surface extérieure (108);
- des éléments de connexion (4) reliant la dite surface intérieure (9) de la dite première plaque (3) à la dite surface intérieure (109) de la dite deuxième plaque (103);
la dite première plaque (3), la dite deuxième plaque (103) et les dits éléments de connexion (4) définissant des canaux de ventilation (7) qui se développent le long d'une direction de développement (14) s'étendant du dit bord radialement intérieur (10, 110) de la dite première plaque (3) et de la dite deuxième plaque (103) au dit bord radialement extérieur (11, 111) de la dite première plaque (3) et de la dite deuxième plaque (103);
dans laquelle au moins une de la dite première plaque (3) et de la dite deuxième plaque (103) présente au moins une protubérance (15) en saillie à partir de la dite surface intérieure (9, 109) de la dite au moins une plaque;
dans laquelle, en outre, la dite protubérance (15) s'étend en hauteur à partir du dit plan intérieur (13, 113) sensiblement jusqu'au dit bord radialement extérieur (11, 111) le long de la dite direction de développement (14) du dit canal de ventilation (7), la dite hauteur étant toujours croissante le long de la dite direction de développement (14) du dit canal de ventilation (7) à partir d'une hauteur minimale (h) sensiblement à proximité du dit bord radialement intérieur (10, 110), jusqu'à une hauteur maximale (H) sensiblement à l'endroit du dit bord radialement extérieur (11, 111).

2. Bande de freinage (1) selon la revendication 1, dans laquelle la dite hauteur est toujours croissante d'une manière continue.

3. Bande de freinage (1) selon la revendication 1 ou 2, dans laquelle la dite protubérance (15) présente une largeur qui s'étend transversalement sensiblement à partir de la ligne centrale (M) de la direction de développement (14) du dit canal de ventilation (7) vers les dits éléments de connexion (4), la dite largeur de la dite protubérance (15) étant croissante d'une manière continue le long de la dite direction de développement (14) du dit canal de ventilation (7), sensiblement à partir du dit bord radialement intérieur (10, 110) jusqu'au dit bord radialement extérieur (11, 111) de la dite au moins une de la dite première plaque (3) et de la dite deuxième plaque (103).

4. Bande de freinage (1) selon une quelconque des revendications précédentes, dans laquelle ladite protubérance (15) définit une surface unique (115) continuellement reliée qui augmente de hauteur, en évitant de rester constante, à partir du dit bord radialement intérieur (10, 110 jusqu'au dit bord radialement extérieur (11, 111).

5. Bande de freinage (1) selon une quelconque des revendications précédentes, dans laquelle la dite protubérance (15) est comprise entre au moins deux des dits éléments de connexion (4).

6. Bande de freinage (1) selon une quelconque des revendications précédentes, dans laquelle la section transversale du canal de ventilation (7) change d'une forme sensiblement rectangulaire à une forme de fente centralement convergente le long de la dite direction de développement (14) du dit canal de ventilation (7).

7. Bande de freinage (1) selon la revendication 6, dans laquelle la dite forme convergente devient plus étroite en allant de l'extrémité de la dite protubérance (15) située à proximité du dit bord intérieur (10) jusqu'au dit bord radialement extérieur (11, 111), en évitant de rester constante.

8. Bande de freinage (1) selon la revendication 6 ou 7, dans laquelle la section transversale du dit canal de ventilation définit un profil transversal (20) de la dite protubérance (15) ayant une dimension continuellement croissante le long de la dite direction de développement (14).

9. Bande de freinage (1) selon la revendication 8, dans laquelle le dit profil transversal (20) a une forme semi-circulaire ou semi-elliptique, la dite forme étant créée par la dite protubérance (15).

10. Bande de freinage (1) selon une quelconque des revendications précédentes, dans laquelle les dits éléments de connexion (4) sont sous la forme de langues.

11. Bande de freinage (1) selon une quelconque des revendications 1 à 9, dans laquelle les dits éléments de connexion (4) sont en forme de broche.

12. Bande de freinage (1) selon une quelconque des revendications précédentes, dans laquelle la dite bande de freinage (1) se développe autour d'un axe de symétrie (s).

13. Bande de freinage (1) selon une quelconque des revendications précédentes, dans laquelle les dits éléments de connexion (4) sont agencés sensiblement radialement sur chacune des dites surfaces intérieures (9, 109).

14. Bande de freinage (1) selon une quelconque des revendications précédentes, dans laquelle les dits éléments de connexion (4) s'étendent sensiblement suivant une développante.

15. Bande de freinage (1) selon une quelconque des revendications 1 à 13, dans laquelle le dit chacun des éléments de connexion (4) s'étend par rapport au dit axe de symétrie (s) le long de portions de trajectoire sensiblement curviligne.

16. Bande de freinage (1) selon une quelconque des revendications précédentes, dans laquelle les dits éléments de connexion (4) sont agencés à égale distance les uns des autres.

17. Bande de freinage (1) selon une quelconque des revendications précédentes, dans laquelle les dits éléments de connexion (4) ont une première extrémité (16) située dans la région intérieure de la dite bande de freinage (1), sensiblement à l'entrée du dit canal de ventilation (7), sensiblement à l'entrée du dit canal de ventilation (7), et une deuxième extrémité (17) située au dit bord radialement extérieur (11, 111) sensiblement à la sortie du dit canal de ventilation (7).

18. Bande de freinage (1) selon la revendication 17, dans laquelle les dits éléments de connexion (4) comprennent des éléments de connexion (4) pourvus d'une partie de couplage (18) située à la dite première extrémité (16), pour couplage à un raccord d'un disque de frein du dit frein à disque, agencés en alternance avec les dits éléments de connexion (4) ne comportant pas la dite partie de couplage (18).

19. Bande de freinage (1) selon une quelconque des revendications précédentes, dans laquelle la dite protubérance (15) est agencée sensiblement le long de la dite ligne centrale (M) du dit canal de ventilation (7) dans la dite direction de développement (14).

20. Bande de freinage (1) selon une quelconque des revendications précédentes, dans laquelle la dite protubérance (15) divise le dit canal de ventilation (7) en deux canaux secondaires (107) s'étendant le long de la dite direction de développement (14).

21. Bande de freinage (1) selon une quelconque des revendications précédentes, dans laquelle la dite largeur de la dite protubérance (15) augmente d'une largeur minimale (I), à l'endroit de la dit hauteur minimale (h) de la dite protubérance (15), jusqu'à une largeur maximale (L) à l'endroit du dit bord radialement extérieur (11, 111).

22. Bande de freinage (1) selon la revendication 11, dans laquelle la dite largeur maximale (L) est sensiblement obtenue à l'endroit de la dite hauteur maximale (H).

23. Bande de freinage (1) selon une quelconque des revendications précédentes, dans laquelle la dite hauteur maximale (H) est inférieure à la hauteur des éléments de connexion (4).

24. Bande de freinage (1) selon une quelconque des revendications 1 à 22, dans laquelle la dite hauteur maximale (H) est approximativement égale à la hauteur des éléments de connexion (4).

25. Bande de freinage (1) selon une quelconque des revendications précédentes, dans laquelle la dite hauteur maximale (H) de la dite protubérance (15) est comprise dans une plage de 1 à 5 mm environ.

26. Bande de freinage (1) selon une quelconque des revendications précédentes, dans laquelle la dite hauteur maximale (H) de la dite protubérance (15) est comprise dans une plage de 2 à 4 mm environ.

27. Bande de freinage (1) selon une quelconque des revendications précédentes, dans laquelle la dite protubérance (15) en vue en plan présente un profil de base (19) qui est sensiblement en forme de triangle ayant des côtés curvilignes, c'est-à-dire arqués.

28. Bande de freinage (1) selon une quelconque des revendications 1 à 26, dans laquelle la dite protubérance (15) en vue en plan présente un profil de base (19) qui a une forme semi-elliptique sensiblement allongée ou semi-circulaire, ou une forme en « dent » ou en « V ».

29. Bande de freinage (1) selon une quelconque des revendications précédentes, dans laquelle la dite protubérance (15) définit une surface croissante unique (115).

30. Bande de freinage (1) selon la revendication 29, dans laquelle la dite surface (115) est continuellement jointe à la dite surface intérieure (8, 108), en allant du dit bord radialement intérieur (10) au dit bord radialement extérieur (11).

31. Bande de freinage (1) selon une quelconque des revendications précédentes, dans laquelle chacune de la dite première plaque (3) et de la dite deuxième plaque (103) présente au moins une protubérance (15).

32. Bande de freinage (1) selon une quelconque des revendications précédentes, dans laquelle chaque canal de ventilation (7) présente deux protubérances (15) mutuellement en face l'une de l'autre de sorte que la section transversale du dit canal de ventilation (7) est toujours sensiblement en forme de « huit » et analogue, le long de la dite direction de développement (14).

33. Bande de freinage (1) d'un disque de frein auto-ventilé pour un frein à disque (1), comprenant:
- une première plaque (3) s'étendant d'un bord radialement intérieur (10, 110) à un bord radialement extérieur (11, 111) de la dite première plaque (3), la dite première plaque (3) présentant:
- une surface extérieure (8) prévue pour coopérer avec un patin de freinage du dit frein à disque;
- une surface intérieure (9) sensiblement située sur un plan intérieur (13) sensiblement parallèle à la dite surface extérieure (8);
- une deuxième plaque (103) s'étendant d'un bord intérieur (110) à un bord extérieur (111) de la dite deuxième plaque (103), la dite deuxième plaque (103) présentant:
- une surface extérieure (108) prévue pour coopérer avec un patin de freinage du dit frein à disque;
- une surface intérieure (109) sensiblement située sur un plan intérieur (113) sensiblement parallèle à la dite surface extérieure (108);
- des éléments de connexion (4) reliant la dite surface intérieure (9) de la dite première plaque (3) à la dite surface intérieure (109) de la dite deuxième plaque (103);
la dite première plaque (3), la dite deuxième plaque (103) et les dits éléments de connexion (4) définissant des canaux de ventilation (7) qui se développent le long d'une direction de développement (14) s'étendant du dit bord radialement intérieur (10, 110) de la dite première plaque (3) et de la dite deuxième plaque (103) au dit bord radialement extérieur (11, 111) de la dite première plaque (3) et de la dite deuxième plaque (103);
dans laquelle au moins une de la dite première plaque (3) et de la dite deuxième plaque (103) présente au moins une protubérance (15) en saillie à partir de la dite surface intérieure (9, 109) de la dite au moins une plaque;
dans laquelle, en outre, la dite protubérance (15) s'étend en hauteur à partir du dit plan intérieur (13, 113) sensiblement jusqu'à 10 millimètres avant le dit bord radialement extérieur (11, 111) le long de la dite direction de développement (14) du dit canal de ventilation (7), la dite hauteur étant toujours croissante le long de la dite direction de développement (14) du dit canal de ventilation (7) à partir d'une hauteur minimale (h) sensiblement à proximité du dit bord radialement intérieur (10, 110), jusqu'à une hauteur maximale (H) sensiblement à l'endroit du dit bord radialement extérieur (11, 111).

34. Bande de freinage (1) selon la revendication 33, dans laquelle la dite hauteur est toujours croissante d'une manière continue.

35. Bande de freinage (1) selon la revendication 33 ou 34, dans laquelle la dite protubérance (15) présente une largeur qui s'étend transversalement sensiblement à partir de la ligne centrale (M) de la direction de développement (14) du dit canal de ventilation (7) vers les dits éléments de connexion (4), la dite largeur de la dite protubérance (15) étant croissante d'une manière continue le long de la dite direction de développement (14) du dit canal de ventilation (7), sensiblement à partir du dit bord radialement intérieur (10, 110) jusqu'au dit bord radialement extérieur (11, 111) de la dite au moins une de la dite première plaque (3) et de la dite deuxième plaque (103).

36. Disque (1) pour un frein à disque comprenant une bande de freinage (1) selon une quelconque des revendications précédentes.

37. Frein à disque comprenant un disque (1) selon la revendication 36.
